# EUROPÄISCHE PATENTSCHRIFT

(11) **EP 2 825 611 B1**
(45) Veröffentlichungstag und Bekanntmachung des Hinweises auf die Patenterteilung: **26.06.2019**
(21) Anmeldenummer: 13709108.8
(22) Anmeldetag: 13.03.2013
(51) Int. Cl.: C09K 5/06, F28D 20/02

(54) **GRAPHIT UND PHASENWECHSELMATERIAL ENTHALTENDE FORMBARE MASSE UND VERFAHREN ZUR HERSTELLUNG EINES FORMKÖRPERS AUS DER MASSE**
MOLDABLE MASS COMPRISING GRAPHITE AND PHASE CHANGE MATERIAL, AND PROCESS FOR PRODUCING A MOLDING FROM THE MASS
MATIÈRE MOULABLE CONTENANT DU GRAPHITE ET UN MATÉRIAU À CHANGEMENT DE PHASE ET PROCÉDÉ DE FABRICATION D'UN CORPS MOULÉ À PARTIR DE LADITE MATIÈRE

(30) Priorität: 13.03.2012 DE 102012203924
(43) Veröffentlichungstag der Anmeldung: 21.01.2015
(73) Patentinhaber: SGL Carbon SE, 65201 Wiesbaden (DE)
(72) Erfinder: KOMPALIK, Dieter, 86405 Meitingen (DE); GÖPFERT, Sebastian, 86405 Meitingen (DE)
(86) Internationale Anmeldenummer: PCT/EP2013/055149
(87) Internationale Veröffentlichungsnummer: WO 2013/135771

(56) Entgegenhaltungen:
- EP-A1- 1 416 027
- EP-A2- 1 972 675
- DE-A1-102005 002 411
- DE-A1-102010 003 663
- US-A1- 2011 089 386
- XIAO M ET AL: "Preparation and performance of shape stabilized phase change thermal storage materials with high thermal conductivity", ENERGY CONVERSION AND MANAGEMENT, ELSEVIER SCIENCE PUBLISHERS, OXFORD, GB, Bd. 43, Nr. 1, 1. Januar 2002 (2002-01-01) , Seiten 103-108, XP004311361, ISSN: 0196-8904, DOI: 10.1016/S0196-8904(01)00010-3

## Beschreibung

Die Erfindung betrifft eine Graphit und Phasenwechselmaterial enthaltende formbare Masse, ein Verfahren zur Herstellung eines Formkörpers aus dieser Masse und einen Formkörper sowie dessen Verwendung.

Beim Betrieb von Batterieanordnungen, insbesondere von Sekundärbatterien (so genannte wiederaufladbare Batterien oder Akkumulatoren), ist wichtig, dass die Batterie nicht überhitzt. Insbesondere darf die Temperatur nicht zu stark steigen, um die Haltbarkeit, die Energiedichte und Ladekapazität der Batterie nicht zu beeinträchtigen oder gar eine Schädigung herbeizuführen. Andererseits können auch bei niedrigen Temperaturen die genannten Batterieeigenschaften beeinträchtigt sein. Insbesondere Lithiumionenbatterien reagieren empfindlich auf ungeeignete Betriebsbedingungen.

Zwar wurde vorgeschlagen, in einer Batterieanordnung - zum Beispiel im Sinne eines Batteriepakets oder dergleichen - zwischen den einzelnen Batteriezellen ein Phasenwechselmaterial (PCM) als Einbettungsmaterial vorzusehen, um dann beim Auftreten eines überhöhten thermischen Budgets durch Phasenumwandlung des PCM eine Aufnahme überschüssiger Wärme in Form latent gespeicherter Wärme zu bewirken, jedoch ist die spezifische Wärmeleitfähigkeit von den vorgeschlagenen PCMs sehr gering, so dass die Be- und Entladungsdynamik sehr niedrig und nicht ausreichend für eine technische Anwendung ist.

Zum Be- und Entladen von PCM mit Wärme wurde zur Erhöhung der Be- und Entladungsdynamik Graphit als thermisch leitfähiges und chemisch inertes Material vorgeschlagen, das mit PCM vermischt wird oder in dessen Hohlräume PCM infiltriert wird.

Herkömmlich sind Kühlpakete, die eine Graphit-PCM-Mischung enthalten, mit einer stabilen Verpackung umhüllt, um ein Auslaufen von flüssigem PCM zu verhindern. Derartige stabile Verpackungen liegen jedoch in der Regel nicht formschlüssig an einem Batteriezellenpaket an und sind nur unter hohem Aufwand in einer Vielzahl von Formen und Größen herstellbar.

DE 10 2005 002 411 A1 betrifft eine grobteilige Mikrokapselzubereitung, enthaltend ein oder mehrere mikroverkapselte Latentwärmespeichermaterialien und ein oder mehrere polymere Bindemittel. In der US 2011/0089386 A1 ist ein Latentwärmespeichermaterial mit feuerhemmenden Eigenschaften beschrieben. Xiao M. et al. beschreiben die Herstellung und Leistung von formstabilisierten Phasenwechselmaterialien zur thermischen Speicherung mit hoher thermischer Leitfähigkeit (Energy Conversion and Management, 43 (2002) 103-108).

In der US 2003/0054230 A1 wird ein Batteriemodul beschrieben, in welchem eine Vielzahl elektrochemischer Zellen, ein PCM und ein wärmeleitendes Gitter, welches unter anderem aus Graphit bestehen kann, in einem Gehäuse zusammen gefasst sind. Nach dieser Lehre wird folglich für jede Batterieanordnung, ein speziell gefertigtes Gehäuse benötigt.

In der EP 1959212 A2 wird ein einen Latentwärmespeicher bildendes Wandelement beschrieben, welches zwei voneinander beabstandete Deckplatten und eine den Zwischenraum zwischen den beiden Deckplatten ausfüllenden Kernschicht, die eine Schüttung von Mikrokapseln eines in einer Kunststoffhülle eingebetteten Phasenwechselmaterials aufweist (EP 1959212 A2, Zusammenfassung). Die Kernschicht kann zusätzlich einen pulverförmigen Wärmeleiter, wie zum Beispiel Graphit, enthalten (EP 1959212 A2, Absatz [0009]). Eine derartige Konstruktion ist jedoch ebenfalls nur unter hohem Aufwand formschlüssig an einem Batteriezellenpaket anzubringen.

Aufgabe ist daher, die geschilderten Nachteile des Stands der Technik zu lösen, insbesondere ein Verfahren zu benennen, mit dem einfach und kostengünstig auch komplex geformte Strukturen mit Graphit und PCM herstellbar sind, die insbesondere formschlüssig an einem Batteriezellenpaket anliegen können.

Gelöst wird die Aufgabe mit einer formbaren Masse, enthaltend Graphit und Phasenwechselmaterial, wobei die Masse Binder und Mikrokapseln enthält, die das Phasenwechselmaterial enthalten. Der Binder ist ein Binder aus der Gruppe bestehend aus Geopolymeren, wie etwa wasserlöslichen Natrium- oder Kaliumsilicaten, Epoxidharzen, Phenolharzen, Silikonharzen, Polyesterharzen, Polypropylen oder Fluorpolymere, und einer beliebigen Kombination aus diesen. Phasenwechselmaterial wird im Folgenden auch mit PCM ("phase change material") abgekürzt. Die erfindungsgemäße Masse wird im Folgenden "Formmasse" oder auch nur "Masse" genannt. Sie hat den Vorteil, dass sie sich gut formen und mit üblichen Verfahren zu komplexen, leichten Strukturen einfach und damit kostengünstig herstellen lässt. Offenbar fördert eine zumindest annähernd kugelförmige Form der Mikrokapseln eine Formbarkeit und Fließfähigkeit der Masse. Außerdem lassen sich durch die gute Verarbeitbarkeit der Formmasse gewünschte Oberflächengeometrien gezielt so fertigen, dass im Gegensatz zu einer steifen Verpackung ein formschlüssiges Anliegen eines mit der Masse herstellbaren Formkörpers an beispielsweise Batteriezellenpakete möglich ist.

Vorteilhaft enthält die Masse 1 bis 60 Gew.-% Graphit, 35 bis 95 Gew.-% PCM enthaltende Mikrokapseln (im Folgenden auch mikroverkapseltes Phasenwechselmaterial (PCM) genannt) und 1 bis 50 Gew.-% Binder. Bei diesen vorteilhaften Zusammensetzungsbereichen lassen sich Formkörper herstellen, die eine besonders gute Eigenschaftskombination aus mechanischer Festigkeit, thermischer Leitfähigkeit und damit Be- und Entladbarkeit mit Wärme und/oder Kälte und thermischer Speicherfähigkeit aufweist, wobei die Masse selbst sehr gute Verarbeitbarkeit, wie Formbarkeit und Fließfähigkeit, aufweist. Besonders vorteilhaft enthält die Masse 5 bis 30 Gew.-% Graphit, 60 bis 90 Gew,-% PCM enthaltende Mikrokapseln und 5 bis 10 Gew.-% Binder, ganz besonders vorteilhaft 10 bis 20 Gew.-% Graphit, 75 bis 85 Gew.-% PCM enthaltende Mikrokapseln und 5 bis 10 Gew.-% Binder.

Der Graphit ist bevorzugt aus der Gruppe bestehend aus Naturgraphit, Graphitexpandat, zerkleinerter Graphitfolie und synthetischen Graphit ausgewählt. Je nach Anwendung kann einer dieser Graphite oder auch eine beliebige Mischung aus diesen vorteilhaft sein. Unter zerkleinerter Graphitfolie wird jede Art von zumindest teilweise komprimiertem Graphitexpandat verstanden, die durch jede mögliche Art zerkleinert wurde, beispielsweise durch Häckseln, Mahlen und andere bekannte Verfahren.
Die einzelnen Arten von Graphit können jeweils vorteilhaft eingesetzt werden. So können beispielsweise Partikel aus Graphitexpandat besonders gut ineinander verhaken und dies trotz des Vorliegens von Binder zwischen den Graphitpartikeln bzw. um die Graphitpartikel. So kann zusätzlich zu einer Verfestigung durch Aushärten von Binder vorteilhaft eine weitere mechanische Stabilisierung des herzustellenden Formkörpers durch Komprimierung des Graphitexpandats erzielt werden.

Dabei liegt vorzugsweise die Dichte von Naturgraphit zwischen 2,0 und 2,2 g/cm³, diejenige von Graphitexpandat zwischen 0,1 und 0,2 g/cm³, diejenige von zerkleinerter Graphitfolie zwischen 1,0 und 1,8 g/cm³ und diejenige von synthetischem Graphit zwischen 1,8 und 2,2 g/cm³.

Es kann vorteilhaft sein, dass der Naturgraphit in Partikelgrößen zwischen 149 und 840 µm, das Graphitexpandat in Partikelgrößen zwischen 5 und 30 mm, die zerkleinerte Graphitfolie in Partikelgrößen zwischen 5 und 1200 µm und der synthetische Graphit in Partikelgrößen zwischen 10 und 600 µm vorliegt.

Angaben zur Partikelgröße sind im Rahmen der vorliegenden Erfindung als Durchschnittswerte zu betrachten. Wenn also von "Partikelgröße" die Rede ist, ist stets die durchschnittliche Partikelgröße gemeint, falls nicht anders beschrieben oder aus dem Zusammenhang eindeutig hervorgehend.

In diesen Partikelgrößenbereichen trägt der Graphit zu einer besonders guten Wärmeleitfähigkeit in einem Formkörper, der mit der Masse hergestellt ist, bei, bewirkt dabei jedoch gleichzeitig gute Verarbeitungseigenschaften der erfindungsgemäßen Masse.

Besonders bevorzugt liegt der Naturgraphit in Partikelgrößen zwischen 180 und 300 µm, das Graphitexpandat in Partikelgrößen zwischen 10 und 20 mm, die zerkleinerte Graphitfolie in Partikelgrößen zwischen 50 und 500 µm und der synthetische Graphit in Partikelgrößen zwischen 150 und 300 µm vor.

Erfindungsgemäß ist der Binder ein Binder aus der Gruppe bestehend aus Geopolymeren, wie etwa wasserlöslichen Natrium- oder Kaliumsilicaten, Epoxidharzen, Phenolharzen, Silikonharzen, Polyesterharzen, Polypropylen oder Fluorpolymere, und einer beliebigen Kombination aus diesen. Diese Binder besitzen im nicht ausgehärteten bzw. im geschmolzenen Zustand Viskositäten, die sie geeignet machen, der Masse ihre Verarbeitbarkeit zu verleihen. Je nach Einsatzbedingungen, wie Temperatur und physikalisch-chemischen Einflüssen, des mit der Masse herzustellenden Formkörpers ist einer der genannten anorganischen oder organischen Binder bevorzugt.

Bevorzugt beträgt die Größe der Mikrokapseln 1 bis 1000 µm. In diesem Größenbereich ist nicht nur eine gute Verarbeitbarkeit der Masse gegeben, sondern auch die Be- und Entladbarkeit des PCM in den Mikrokapseln ist aufgrund der geringen Wegstrecken bei derart kleinen Mikrokapseln sehr hoch. Besonders bevorzugt beträgt die Größe zwischen 5 und 200 µm, ganz besonders bevorzugt zwischen 5. und 50 µm.

Bevorzugt ist das PCM aus der Gruppe bestehend aus Paraffinen, Salzhydraten und anderen bekannten PCM's, wie z.B. Zuckeralkoholen oder Fettsäuren, gewählt Als Zuckeralkohole können beispielsweise Pentaerythritol, Trimethylolethan, Erythritol, Mannitol, Neopentylglykol und jede beliebige Mischung davon verwendet werden. Als Fettsäuren könne beispielsweise Caprinsäure, Laurinsäure, Myristinsäure, Palmitinsäure, Stearinsäure und jede beliebige Mischung davon zum Einsatz kommen. Die Salzhydrate können beispielweise Calciumchloridhexahydrat, Magnesiumchloridhexahydrat, Lithiumnitrattrihydrat und Natriumacetattrihydrat eingesetzt werden. Als Paraffine können gesättigte Kohlenwasserstoffe mit der allgemeinen Summenformel CₙH₂ₙ₊₂ verwendet werden, wobei die Zahl n zwischen 18 und 32 liegen kann. Die molare Masse derartiger Paraffine liegt damit zwischen 275 und 600 Gramm pro Mol. Die Paraffine können je nach Schmelzpunkt untergliedert werden. So schmilzt zum Beispiel Hartparaffin zwischen 50 und 60 °C, Weichparaffin bei etwa 45 °C. Die sogenannten Mikrowachse gehören auch zu den Paraffinen und weisen sogar Erstarrungspunkte zwischen 70 und 80 °C auf und enthalten Kettenlängen (n) von bis zu 75 Kohlenstoffatomen. Zwischen den Hartparaffinen und den Mikrowachsen liegen die sogenannten Intermediate, das sind Paraffine, die Erstarrungspunkte von 60 bis 70 °C aufweisen. Je nach Einsatzbereich des herzustellenden Formkörpers, wie insbesondere der Temperatur, wird eines der genannten PCM's vorteilhaft ausgewählt.

Es kann vorteilhaft sein, dass die Masse mindestens ein Additiv enthält, wie ein die Eigenschaften der Masse und/oder des daraus herzustellenden Formkörpers verbesserndes Additiv. Dies kann vorteilhaft ein Tensid sein, wie etwa Alkylbenzolsulfonat, oder ein Fließmittel, wie etwa Polycarboxylatether, um durch Reduzierung der Oberflächenspannung die Fließfähigkeit der Masse zu erhöhen.

Auch kann es vorteilhaft sein, ein Dispergiermittel, wie etwa Polyvinylpyrrolidon, als Additiv zu der Masse zu geben, um die Dispergierbarkeit der Masse zu erhöhen.

Als weiteres Additiv kann beispielsweise eine Substanz eingemischt werden, die die Aushärtung des Binders fördert (im folgenden aushärtungsfördernde Substanz), wie beispielsweise ein Härter, und/oder Verfahren angewendet werden, die die Aushärtung des Binders fördern, z.B. Bestrahlung mit IR- oder UV- oder ähnlichen, energiereichen Strahlen oder Abbinden durch CO₂ Aufnahme.

Die Aufgabe wird des Weiteren mit einem Verfahren nach Anspruch 8 gelöst. Gemäß dem erfindungsgemäßen Verfahren wird die erfindungsgemäße Masse zum Formkörper geformt und der Binder in einem Verfestigungsschritt ausgehärtet oder verfestigt. Das Verfahren besitzt die oben bei der Erläuterung der Formmasse bereits genannten Vorteile, dass die leicht formbare Masse lediglich in einen Formkörper überführt werden muss, der durch Aushärten des Binders zu einem festen Formkörper verfestigt wird. Dadurch lassen sich leicht und damit kostengünstig auch komplex geformte Formkörper herstellen.

Vorteilhaft wird der Schritt des Formens der Masse mit einem herkömmlichen Verfahren, wie etwa mit einem Verfahren aus der Gruppe bestehend aus Gießverfahren, Spritzverfahren, Spritzgussverfahren, Blasformverfahren, Gesenkpressverfahren, Extrusion oder Kalandrieren durchgeführt.

Im Falle von Gesenkpressen können vorteilhaft Drücke bis 400 MPa eingesetzt werden, sowie Verarbeitungstemperaturen zwischen -22 °C und 220 °C. Bei Gussverfahren lassen sich vorteilhaft beheizte oder unbeheizte Gussformen einsetzen, wobei mit oder ohne Verrüttelungstechnik gearbeitet werden kann.

Vorzugsweise umfasst das Verfahren vor dem Formschritt einen Mischschritt, in dem die Komponenten der Masse, wie insbesondere Graphit, PCM enthaltende Mikrokapseln und Binder, sowie gegebenenfalls Additive, wie etwa Tenside oder Dispergiermittel oder aushärtungsfördernde Substanzen, vermischt werden. Dies erhöht vorteilhaft die Homogenität der Masse und damit eines aus der Masse herzustellenden Formkörpers.

Zum Vermischen lassen sich vorteilhaft Lödige-Mischer, Eirich-Mischer, Continua, Flexomix, Compounder, mechanische Kneter oder Turbomixer_einsetzen.

Der Mischschritt kann bei Temperaturen zwischen -22 °C und 220 °C durchgeführt werden, wobei Mischergröße, Mischergeschwindigkeit und -dauer je nach Anwendungsfall, Binder, Korngröße des Graphits etc. variiert werden können.

Vorteilhaft werden 1 bis 60 Gew.-% Graphit, 35 bis 95 Gew.-% mikroverkapseltes Phasenwechselmaterial und 1 bis 50 Gew.-% Binder und gegebenenfalls weitere Komponenten, wie etwa Additive, gemischt.

Es kann vorteilhaft sein, zunächst den Graphit und die Mikrokapseln trocken zu vermischen und anschließend den Binder zuzufügen.

Es können die Mikrokapseln aber stattdessen auch in ein Dispergiermittel eingerührt werden und die entstehende Dispersion mit dem Graphit nass gemischt werden. Vorzugsweise wird als Dispergiermittel der Binder eingesetzt. In diesem Fall muss kein zusätzliches Dispergiermittel eingesetzt werden. Alternativ können als Dispergiermittel vorteilhaft Polyvinylpyrrolidon oder auch Polyacrylate eingesetzt werden.

Die Aufgabe wird des Weiteren mit einem Formkörper nach Anspruch 11 gelöst. Der erfindungsgemäße Formkörper ist mit einer erfindungsgemäßen Masse hergestellt. Er ist besonders bevorzugt mit einem erfindungsgemäßen Verfahren hergestellt, enthält erfindungsgemäß Graphit, mikroverkapseltes Phasenwechselmaterial und Binder, der zumindest teilweise ausgehärtet ist, vorzugsweise vollständig ausgehärtet ist.

Mit dem erfindungsgemäßen Formkörper wird ein Formkörper bereitgestellt, der sowohl hohen mechanischen Anforderungen genügt als auch besonders gut zur Speicherung sowie Be- und Entladung von Wärme und/oder Kälte geeignet ist. Der Binderanteil bewirkt die hohe mechanische Stabilität; die Speicherung von Wärme und/oder Kälte wird durch das mikroverkapselte PCM ermöglicht, und der Graphit ermöglicht die schnelle Be- und Entladung von Wärme und/oder Kälte.

Bevorzugt enthält der erfindungsgemäße Formkörper 1 bis 60 Gew.-% Graphit, 35 bis 95 Gew.-% mikroverkapseltes Phasenwechselmaterial und 1 bis 50 Gew.-% Binder, besonders bevorzugt 5 bis 30 Gew.-% Graphit, 60 bis 90 Gew.-% mikroverkapseltes Phasenwechselmaterial und 5 bis 10 Gew.-% Binder. Ganz besonders bevorzugt 10 bis 20 Gew.-% Graphit, 75 bis 85 Gew.-% PCM enthaltende Mikrokapseln und 5 bis 10 Gew.-% Binder.

Überraschenderweise hat der hohe Binderanteil nicht zur Folge, dass die Speicher- und Belade- sowie Entladeeigenschaften stark gegenüber einer Mischung von Graphit und PCM ohne Binderanteil absinken.

Besonders vorteilhaft ist ein Formkörper gemäß der Erfindung mit einer Masse gemäß der Erfindung hergestellt. Dadurch sind alle Vorteile, die oben bereits bei der Erläuterung der erfindungsgemäßen Masse genannt sind, auch für den erfindungsgemäßen Formkörper gegeben.

Nach einem weiteren Aspekt der Erfindung wird ein erfindungsgemäßer Formkörper zur Temperierung, wie insbesondere zur Kühlung und/oder dem Heizen, verwendet. Es lassen sich Temperaturerhöhungen und -senkungen abpuffern und ableiten. Dank der guten Verarbeitbarkeit und Formbarkeit in Kombination mit den oben beschriebenen Verarbeitungsverfahren lassen sich nahezu alle denkbaren Geometrien herstellen. In Kombination mit den verschiedenen einsetzbaren Bindern ist somit eine große Bandbreite möglicher Verwendungen möglich. Diese umfassen beispielsweise einfach geformte Halbzeuge, wie etwa Platten, Stäbe und Blöcke. Weiterhin sind Kühlelemente für Batterien, wie etwa Sekundärbatterien, insbesondere Lithiumionenbatterien, eine mögliche Verwendung. Diese können plattenförmig aber auch kompliziert, wie L- oder C-förmig oder trogförmig sein.

Weitere erfindungsgemäße Verwendungen für erfindungsgemäße Formkörper sind Kühlelemente für Raumkühlung im Bauwesen, wie Kühldeckenelemente, Kühlelemente für Fahrzeuge, beispielsweise in Fahrzeugkabinen, wie etwa für Kfz, LKW, Wohnmobile etc.

Auch ist erfindungsgemäß die Verwendung zur Aufnahme, Speicherung und Abgabe von Friktionswärme, beispielsweise von Motoren, wie etwa Elektromotoren, Bremsen, Radnabenmotoren, und ähnlichem vorgesehen.

Weiterhin lassen sich Verwendungen zur Temperierung bei niedrigen Außentemperaturen von beispielsweise unter 15°C für Batterien nennen. Durch die Speicherung von Wärme lässt sich ein gleichmäßiger Betrieb der kälteempfindlichen Lithiumionenbatterien gewährleisten.

Eine weitere bevorzugte Verwendung ist die passive Kühlung von stationären oder mobilen Ladegeräten, Netzteilen, Leistungselektronik, Elektromotoren und Radnabenmotoren.

Eine weitere bevorzugte Verwendung des erfindungsgemäßen Formkörpers in Photovoltaik-Modulen, insbesondere als Kühlelement in Photovoltaik-Modulen. Dabei wird der erfindungsgemäße Formkörper vorzugsweise an der sonnenabgewandten Seite des Photovoltaik-Moduls angebracht. Halbleiter-Solarzellen in Photovoltaik-Modulen weisen bei steigender Temperatur eine sinkende Effizienz in der Stromerzeugung auf. Durch die Abpufferung der Temperaturerhöhung ab Tagesanbruch kann somit eine Effizienzsteigerung des Photovoltaik-Moduls erreicht werden.

Im Folgenden wird die Erfindung anhand eines Ausführungsbeispiels näher erläutert.

Zum Herstellen einer erfindungsgemäßen Masse werden zunächst 2 kg Graphitexpandat mit einer Dichte von 0,1 g/l durch herkömmliches Expandieren von Graphitsalz hergestellt. Als mikroverkapseltes PCM werden 7 kg Micronal ® der Firma BASF S.E. mit einer Größe der Kapseln zwischen 2 und 20 µm in 1 kg Phenolharz als Dispergiermittel eingerührt. Die sich ergebende Dispersion wird in einem Eirich-Mischer mit dem Graphitexpandat 0,5 h gemischt. Des Weiteren werden 120 g Natriumdodecylbenzylsulfonat als Netzmittel zugegen, um die Fließfähigkeit der entstandenen erfindungsgemäßen Formmasse zu erhöhen.

Ein Teil der Masse wird in eine Gesenkpresse gegeben und bei 300 MPa in eine Form als Boden der Gesenkpresse gedrückt, die die Gestalt eines gebogenen Kühlungselements besitzt. Bei Temperaturen von 180 °C härtet der Phenolharz, der auch als Binder der Masse wirkt, aus. Der entstandene Formkörper wird entnommen und wird als Kühlungselement einer LKW-Fahrzeugkabine verwendet. Durch seine hohe mechanische Festigkeit kann das Element einer Größe von 60 x 60 cm freitragend als Wandelement in der Fahrzeugkabine verbaut werden. Es ist in der Lage, Wärme bzw. Kälte zu speichern und in die Kabine abzugeben. Durch den Graphitanteil wird eine schnelle Be- und Entladung erzielt. Das PCM speichert die Wärme bzw. Kälte und kann durch seinen fest-flüssig-Phasenwechsel auch ohne Ableiten von Wärme aus der Kabine heraus für eine gleichmäßige Temperierung sorgen. Durch das Verkapseln des Paraffins als PCM tritt bei einem Unfall keine brennbare Flüssigkeit aus, sondern das aufgeschmolzene Paraffin bleibt sicher von einer Polymethylmethacrylat (PMMA)-Hülle umschlossen.

Ein anderer Teil der Masse wird in eine Spritzgussmaschine gegeben und wird unter hohem Druck in geheizte Formen gespritzt, die die Form von Kühlelementen für Sekundärbatteriesysteme, in diesem Beispiel Lithiumionenbatterien, besitzt. Selbst komplizierte Geometrien mit beispielsweise scharfen Kanten von eckig geformten Batteriezellen lassen sich erfindungsgemäß herstellen. Der beispielsweise L-förmige Formkörper passt formschlüssig an eine derartige Batteriezelle.

Nach einer weiteren Variante des Ausführungsbeispiels wird als ein anorganischer Binder eine Wasserglaslösung eingesetzt, als Graphit Naturgraphit. Diese werden zusammen mit den PCM-gefüllten Mikrokapseln der Fa. BASF mit einem mechanischen Kneter vermengt und die Masse nicht direkt zu Formkörpern verarbeitet, sondern verpackt und zu einem Verarbeiter versandt, der beispielsweise ein Flugzeugbauer ist. Dort wird vor Ort die Masse im Flugzeugaufbau an einer vorgesehenen Stelle, beispielsweise der Innenverkleidung eingespritzt.

## Patentansprüche

1. Formbare Masse, enthaltend Graphit, Binder und Phasenwechselmaterial (PCM) enthaltende Mikrokapseln, **dadurch gekennzeichnet,**
**dass** der Binder ein Binder aus der Gruppe bestehend aus Geopolymeren, wie etwa wasserlöslichen Natrium- oder Kaliumsilicaten, Epoxidharzen, Phenolharzen, Silikonharzen, Polyesterharzen, Polypropylen oder Fluorpolymere, und einer beliebigen Kombination aus diesen ist.

2. Masse nach Anspruch 1, **dadurch gekennzeichnet, dass** sie 1 bis 60 Gew.-% Graphit, 35 bis 95 Gew.-% PCM enthaltende Mikrokapseln und 1 bis 50 Gew.-% Binder enthält.

3. Masse nach Anspruch 1 oder 2, **dadurch gekennzeichnet, dass** der Graphit aus der Gruppe bestehend aus Naturgraphit, Graphitexpandat, zerkleinerter Graphitfolie, synthetischem Graphit und einer beliebigen Kombination aus diesen ausgewählt ist.

4. Masse nach Anspruch 3, **dadurch gekennzeichnet, dass** der Naturgraphit in Partikelgrößen zwischen 149 und 840 µm, das Graphitexpandat in Partikelgrößen zwischen 5 und 30 mm, die zerkleinerte Graphitfolie in Partikelgrößen zwischen 5 und 1200 µm und der synthetische Graphit in Partikelgrößen zwischen 10 und 600 µm vorliegt.

5. Masse nach zumindest einem der vorhergehenden Ansprüche, **dadurch gekennzeichnet, dass** die Größe der Mikrokapseln 1 bis 1000 µm beträgt.

6. Masse nach zumindest einem der vorhergehenden Ansprüche, **dadurch gekennzeichnet, dass** das PCM aus der Gruppe bestehend aus Paraffin, Salzhydrat, Zuckeralkohol oder Fettsäure gewählt ist.

7. Masse nach zumindest einem der vorhergehenden Ansprüche, **dadurch gekennzeichnet, dass** die Masse mindestens ein Additiv enthält, insbesondere ausgewählt aus der Gruppe bestehend aus Tensiden und anderen Dispergierhilfen, wie etwa Alkylbenzolsulfonat und Polyvinylpyrrolidon.

8. Verfahren zur Herstellung eines Formkörpers mittels einer Masse gemäß zumindest einem der Ansprüche 1 bis 7, **dadurch gekennzeichnet, dass** die Masse zum Formkörper geformt und der Binder in einem Verfestigungsschritt ausgehärtet oder verfestigt wird.

9. Verfahren nach Anspruch 8, **dadurch gekennzeichnet, dass** die Masse mit einem Verfahren aus der Gruppe bestehend aus Gießverfahren, Spritzverfahren, Spritzgussverfahren, Blasformverfahren, Gesenkpressverfahren, Extrusion oder Kalandrieren geformt wird.

10. Verfahren nach Anspruch 8 oder 9, **dadurch gekennzeichnet, dass** der Binder nach dem Formen des Formkörpers ausgehärtet wird, insbesondere durch erhöhte Temperatur, durch Zusatz von aushärtungsfördernden Substanzen oder durch Abbinden durch CO₂ Aufnahme.

11. Formkörper hergestellt mit einer Masse nach zumindest einem derAnsprüche 1 bis 7.

12. Formkörper nach Anspruch 11, **dadurch gekennzeichnet, dass** er zwischen 1 und 60 Gew.-% Graphit, zwischen 35 und 95 Gew.-% PCM enthaltende Mikrokapseln und zwischen 1 und 50 Gew.-% Binder enthält.

13. Verwendung eines Formkörpers nach Anspruch 11 oder 12 als Kühlelement, Batterietemperierelement, Kühlelement für Fahrzeugkabinen, für elektronische Bauteile, für Motoren oder zur Aufnahme, Speicherung und/oder Abgabe von Friktionswärme.

14. Verwendung eines Formkörpers nach Anspruch 13, **dadurch gekennzeichnet, dass** das Kühlelement ein Kühldeckenelement ist.

15. Verwendung eines Formkörpers nach Anspruch 11 oder 12 in Photovoltaik-Modulen.

## Claims

1. Mouldable mass, containing graphite, binder and microcapsules containing phase change material (PCM), **characterized in that** the binder is a binder from the group consisting of geopolymers such as water-soluble sodium or potassium silicates, epoxy resins, phenolic resins, silicone resins, polyester resins, polypropylene or fluoropolymers, and any combination thereof.

2. Mass according to claim 1, **characterized in that** it contains 1 to 60 wt.% graphite, 35 to 95 wt.% microcapsules containing PCM, and 1 to 50 wt.% binder.

3. Mass according to either claim 1 or claim 2, **characterized in that** the graphite is selected from the group consisting of natural graphite, expanded graphite, comminuted graphite foil, synthetic graphite and any combination thereof.

4. Mass according to claim 3, **characterized in that** the natural graphite is present in particle sizes of between 149 and 840 µm, the expanded graphite in particle sizes of between 5 and 30 mm, the comminuted graphite foil in particle sizes of between 5 and 1200 µm, and the synthetic graphite in particle sizes of between 10 and 600 µm.

5. Mass according to at least one of the preceding claims, **characterized in that** the size of the microcapsules is between 1 and 1000 µm.

6. Mass according to at least one of the preceding claims, **characterized in that** the PCM is selected from the group consisting of paraffin, salt hydrate, sugar alcohol or fatty acid.

7. Mass according to at least one of the preceding claims, **characterized in that** the mass contains at least one additive, in particular selected from the group consisting of surfactants and other dispersing aids, such as alkylbenzene sulfonate and polyvinylpyrrolidone.

8. Method for producing a moulding by means of a mass according to at least one of claims 1 to 7, **characterized in that** the mass is shaped to form the moulding and the binder is cured or solidified in a solidification step.

9. Method according to claim 8, **characterized in that** the mass is shaped using a method from the group consisting of casting methods, spraying methods, injection moulding methods, blow moulding methods, stamping press methods, extrusion moulding and calendering.

10. Method according to either claim 8 or claim 9, **characterized in that** the binder is cured after the moulding is shaped, in particular by increasing the temperature, by adding substances that promote curing, or by setting through CO₂ absorption.

11. Moulding produced by means of a mass according to at least one of claims 1 to 7.

12. Moulding according to claim 11, **characterized in that** it contains between 1 and 60 wt.% graphite, between 35 and 95 wt.% microcapsules containing PCM, and between 1 and 50 wt.% binder.

13. Use of a moulding according to either claim 11 or claim 12 as a cooling element, a battery temperature control element, a cooling element for vehicle cabins, for electronic components, for engines, or for absorbing, storing and/or dissipating frictional heat.

14. Use of a moulding according to claim 13, **characterized in that** the cooling element is a cooling ceiling element.

15. Use of a moulding according to either claim 11 or claim 12 in photovoltaic modules.

## Revendications

1. Composition moulable comprenant du graphite, un liant et des microcapsules contenant un matériau à changement de phase (PCM), **caractérisée en ce que** le liant est un liant choisi dans le groupe constitué par les géopolymères tels que les silicates de sodium ou de potassium hydrosolubles, les résines époxy, les résines phénoliques, les résines silicone, les résines polyester, le polypropylène et les fluoropolymères, et toute combinaison de ceux-ci.

2. Composition selon la revendication 1, **caractérisée en ce qu'**elle contient 1 à 60 % de graphite, 35 à 95 % de microcapsules contenant du PCM et 1 à 50 % de liant.

3. Composition selon la revendication 1 ou 2, **caractérisée en ce que** le graphite est choisi dans le groupe constitué par le graphite naturel, le graphite expansé, la feuille de graphite broyée, le graphite synthétique et toute combinaison de ceux-ci.

4. Composition selon la revendication 3, **caractérisée en ce que** le graphite naturel est présent dans des granulométries comprises entre 149 et 840 µm, le graphite expansé dans des granulométries comprises entre 5 et 30 mm, la feuille de graphite broyé dans des granulométries comprises entre 5 et 1 200 µm et le graphite synthétique dans des granulométries comprises entre 10 et 600 µm.

5. Composition selon l'une des revendications précédentes, **caractérisée en ce que** la taille des microcapsules est comprise entre 1 à 1 000 µm.

6. Composition selon l'une des revendications précédentes, **caractérisée en ce que** le PCM est choisi dans le groupe constitué par la paraffine, l'hydrate salin, l'alcool glucidique ou les acides gras.

7. Composition selon l'une des revendications précédentes, **caractérisée en ce que** la composition contient au moins un additif, en particulier choisi dans le groupe constitué par les tensioactifs et autres agents dispersants, tels que le sulfonate d'alkylbenzène et la polyvinylpyrrolidone.

8. Procédé de fabrication d'un corps moulé au moyen d'une composition selon l'une des revendications 1 à 7, **caractérisé en ce que** la composition est moulée à la forme du corps moulé et que le liant est durci ou consolidé dans une étape de consolidation.

9. Procédé selon la revendication 8, **caractérisé en ce que** la composition est formée par un procédé du groupe constitué par le procédé de coulée, le procédé d'injection, le procédé de moulage par injection, le procédé de soufflage, le procédé de pressage à matricer, l'extrusion ou le calandrage.

10. Procédé selon la revendication 8 ou 9, **caractérisé en ce que** le liant est durci après moulage du corps moulé, en particulier par une température élevée, par addition de substances durcissantes ou par prise par absorption de CO₂.

11. Corps moulé fabriqué à partir d'une composition selon l'une des revendications 1 à 7.

12. Corps moulé selon la revendication 11, **caractérisé en ce qu'**il contient entre 1 et 60 % de graphite, entre 35 et 95 % de microcapsules contenant du PCM et entre 1 et 50 % de liant.

13. Utilisation d'un corps moulé selon la revendication 11 ou 12 comme élément de refroidissement, élément de régulation de température de batterie, élément de refroidissement pour cabines de véhicules, pour composants électroniques, pour moteurs ou pour absorber, stocker et/ou dégager de la chaleur par friction.

14. Utilisation d'un corps moulé selon la revendication 13, **caractérisée en ce que** l'élément de refroidissement est un élément de refroidissement pour plafond.

15. Utilisation d'un corps moulé selon la revendication 11 ou 12 dans des modules photovoltaïques.
